(19)

Europäisches Patentamt

European Patent Office

Office européen des brevets

(11) **EP 2 210 018 B1**

(12) **EUROPÄISCHE PATENTSCHRIFT**

(45) Veröffentlichungstag und Bekanntmachung des Hinweises auf die Patenterteilung:
**29.08.2012   Patentblatt 2012/35**

(21) Anmeldenummer: **08841601.1**

(22) Anmeldetag: **14.10.2008**

(51) Int Cl.:
**F16H 59/70** *(2006.01)*     **G01D 5/14** *(2006.01)*

(86) Internationale Anmeldenummer:
**PCT/EP2008/008680**

(87) Internationale Veröffentlichungsnummer:
**WO 2009/052976 (30.04.2009 Gazette 2009/18)**

(54) **SENSOR FÜR DIE SCHALTSTELLUNG EINER SCHALTWELLE UND ENTSPRECHENDES ERMITTLUNGSVERFAHREN**

SENSOR FOR THE SHIFT POSITION OF A SELECTOR SHAFT AND CORRESPONDING DETECTION METHOD

CAPTEUR POUR LA POSITION DE COMMANDE D'UN ARBRE DE COMMANDE DE VITESSES ET METHODE DE DETECTION DE POSITION CORRESPONDANTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.10.2007   DE 102007050531**

(43) Veröffentlichungstag der Anmeldung:
**28.07.2010   Patentblatt 2010/30**

(73) Patentinhaber: **AB Elektronik GmbH**
**59368 Werne (DE)**

(72) Erfinder:
• **IRRGANG, Marcus**
**44534 Lünen (DE)**

• **KLOPFENSTEIN, Laurent**
**59368 Werme (DE)**
• **ROH, Eugen**
**44627 Herne (DE)**
• **SCHERNER, Simon**
**78120 Furtwangen (DE)**

(74) Vertreter: **Kalkoff & Partner**
**Patentanwälte**
**Martin-Schmeisser-Weg 3a-3b**
**44227 Dortmund (DE)**

(56) Entgegenhaltungen:
**DE-C1- 4 121 410     US-A- 4 853 629**
**US-A- 5 625 289     US-A- 5 867 092**

**Beschreibung**

Die Erfindung betrifft eine Sensorvorrichtung und ein Verfahren zur Ermittlung der Schaltstellung einer Schaltwelle sowie eine Getriebeschaltvorrichtung mit einer solchen Sensorvorrichtung.

Gegenstand der Erfassung ist eine Schaltwelle, die beim Schalten zwischen verschiedenen Schaltpositionen eine translatorische Bewegung in Achsrichtung sowie eine rotatorische Bewegung um ihre Längsachse ausführt. Insbesondere kann es sich hierbei um eine Schaltwelle eines Getriebes, beispielsweise eines Kfz-Getriebes handeln. Eine solche Schaltwelle wird üblicherweise manuell durch einen Gangwahlhebel in verschiedene Schaltpositionen bewegt, die jeweils einerseits durch eine feste Lage in Längsrichtung und andererseits durch eine feste Drehposition in Umfangsrichtung der Welle bestimmt sind. Alternativ kann die Bewegung der Schaltwelle auch anders als durch einen Gangwahlhebel erfolgen. In jedem Fall aber ist der Schaltzustand der Welle durch die jeweilige Position auf diskrete Werte - Schaltpositionen - festgelegt. Die Schaltpositionen bestimmen den jeweils eingelegten Gang des Getriebes und ein Umschalten zwischen verschiedenen Gängen erfolgt durch Bewegung zwischen den Schaltpositionen.

Für verschiedene Anwendungen ist es sinnvoll, den Schaltzustand einer solchen Schaltwelle sensorisch zu ermitteln und dann beispielsweise als elektrisches Ausgangssignal weiter verarbeiten zu können. Insbesondere im Kfz-Bereich soll für einige Anwendungen der Schaltzustand des Getriebes auf diese Weise erfasst werden.

Es sind zwar eine Anzahl von Sensortechnologien zur Positionserfassung bekannt, darunter optische, magnetische, induktive, kapazitive oder potentiometrische Sensoren. Diese Sensoren müssen aber in geeigneter Weise an der Welle angebracht werden. So ist beispielsweise bereits eine Anbringung von Sensoren an einem Wellenende realisiert worden. Andere vorbekannte Sensorvorrichtungen zeigen radial von der Welle ausgehende Elemente, die mit Sensorelementen zusammenwirken, die in Anordnung und Anzahl den Schaltpositionen entsprechen.

In der DE 91 09 855.6 U1 ist eine Vorrichtung zum Erkennen des Schaltzustandes eines Getriebes offenbart. Eine Schaltwelle ist in Längsrichtung verschiebbar und um ihre Achse drehbar. Sie trägt an einem rechtwinklig zur Längsachse herausstehenden Finger einen Permanentmagneten, der je nach Schaltposition unterschiedliche Stellungen gegenüber einer Sensoranordnung einnimmt. Die Sensoranordnung umfasst eine Anzahl von Reed-Schaltern, die hinter Ausschnitten einer Abschirmplatte angeordnet sind. Die Ausschnitte können durch Blenden verändert werden, so dass die Feldstärke eines davor angeordneten Magneten zum Schalten des jeweils direkt gegenüberliegenden Reed-Schalters ausreicht, die anderen Reed-Schalter jedoch abgeschirmt werden. Durch Auswertung des elektrischen Zustandes der Reed-Schalter kann so die Position der Welle und damit der Schaltzustand des Getriebes erkannt werden.

In der DE 197 48 115 C2 ist eine Vorrichtung zum elektromechanischem Schalten eines Gangwechselgetriebes beschrieben. Eine Schaltwelle ist zur Übertragung von Schalt- oder Wählbewegungen sowohl translatorisch in axialer Richtung parallel zur Wellenachse als auch rotatorisch um die Wellenachse bewegbar. Ein auf der Schaltwelle angebrachtes Ringelement weist radial voneinander beabstandete Magnete auf. Auf Seiten eines Aufnahmegehäuses sind im Abstand voneinander Hall-Sensoren angeordnet, mit denen das Magnetfeld der Magnete erkannt und einer translatorischen sowie Rotationsbewegung zugeordnet werden kann.

In der US 2004/0100253 ist ein Positions-Messsystem offenbart, mit dem die Position eines Verschiebeglieds in einer Messrichtung ermittelt werden kann. Ein Grundkörper ist aus permanent magnetisierbarem Material ausgebildet. In Messrichtung abwechselnd angeordnete Abschnitte unterschiedlicher Magnetisierung, die durch magnetisch schwache Bereiche gebildet sind, ermöglichen es, mit Hilfe eines Sensors, beispielsweise einem analogen oder digitalen Hall-Sensor oder GMR-Sensor, die Position des Verschiebegliedes zu ermitteln.

Die DE 197 48 115 offenbart eine Vorrichtung zum elektromechanischem Schalten eines Gangwechselgetriebes, bei der die axiale und radiale Stellung einer Schaltwelle erfasst wird. Hierbei sind radial voneinander beabstandete Magnete auf dem Umfang der Schaltwelle angeordnet. Dem gegenüber sind Halt-Sensoren in Axialrichtung nebeneinander angeordnet und erfassen die magnetische Feldstärke der Magnete. Die Magnete sind abwechselnd unterschiedlich ausgerichtet, so dass ein Signalmuster entsteht. Die jeweiligen Sensorwerte der Hall-Sensoren ergeben für jede Position ein bestimmtes Muster, so dass eine Positionsbestimmung möglich ist.

In der DE 196 21 404 ist eine Positionserfassungvorrichtung für ein Automatikgetriebe beschrieben. Entsprechend der Schaltstellungen des Automatikgetriebes nimmt eine Schaltwelle verschiedene Drehpositionen ein, die mit Sensoren erfasst werden. Neben optischer Erfassung erfolgt in einigen Ausführungsformen auch eine Erfassung mittels Magnetsensoren. Hierbei ist ein zahnradförmiger Rotor aus magnetischem Material auf einer Welle angebracht, wobei ein Hall-Element oder ein Magnetowiderstandselement dem gegenüber an einer Leiterplatte angebracht ist. Bei Drehung der Welle variiert der magnetische Widerstand, so dass anhand der Ausgangssignale des Magnetsensorelements die Position des Schalthebels ermittelbar ist.

In der gattungsgemäßen US 5,867,092 wird ein Schaltgetriebe mit einem Sensor für Positionen einer Schaltwelle beschrieben. In einer ersten Ausführung werden verschiedene lineare Verschiebungspositionen der Schaltwelle durch einen Hall-Effekt-Sensor ermittelt. Eine rechteckige Metallplatte, die im Abstand an der Welle angebracht ist, weist eine Mehrzahl von rechteckigen Öffnungen in drei oder vier parallelen Spuren auf. Permanentmagnete sind hinter der Platte angeordnet. Durch vor der Platte angeordnete Hall-Effekt-Sensoren wird entsprechend der Stellung der Welle das Magnetfeld als binäres Signal ausgewertet. Die Schaltstellungen werden anhand der Signalkombinationen der verschiedenen Sensoren erkannt und zugeordnet.

Die US 5,625,289 offenbart einen magnetischen Positionssensor für die Drehposition der Schaltwelle eines Getriebes. Eine Sensorvorrichtung weist einen Träger mit einem Magneten und Magnetsensoren auf. Abschirmplatten sind fest an der Welle angebracht und bewegen sich im Zwischenraum zwischen dem Magnet und den Sensoren. Das magnetische Feld wird durch die Abschirmplatte geändert, so dass an den Sensoren ein eindeutiges Signal der Position der Welle zuzuordnen ist.

Die US 4,853,629 beschreibt eine Vorrichtung mit einem Hall-Effekt-Sensor zur Feststellung der Position einer beweglichen Komponente, wie bspw. einer Schaltwelle. Die bewegliche Komponente weist im Abstand angeordnete Erhebungen auf, die mit Schaltpositionen übereinstimmen. Bei Verschiebebewegungen der Welle bewegen die Erhebungen ein hiermit durch Federkraft in Eingriff stehendes Bewegungsglied und bewegen so einen Magneten. Das Magnetfeld wird von einem Hall-Effekt-Schalter erfasst, der eine Erhöhung oder Verringerung der Feldstärke über einen Schwellenbetrag hinaus feststellt.

Es ist Aufgabe der Erfindung, eine Sensorvorrichtung und ein Verfahren zur Ermittlung der Schaltstellung einer Schaltwelle vorzuschlagen, die sich durch einen besonders einfachen und kostengünstig zu realisierenden Aufbau auszeichnen.

Diese Aufgabe wird gelöst durch eine Sensorvorrichtung nach Anspruch 1, eine Getriebeschaltvorrichtung nach Anspruch 12 und ein Verfahren nach Anspruch 13. Abhängige Ansprüche beziehen sich auf vorteilhafte Ausführungsformen der Erfindung.

Erfindungsgemäß ist auf der Schaltwelle eine Kulisse fest angebracht. Die Kulisse folgt der Bewegung der Welle direkt und führt somit ebenfalls eine translatorische und rotatorische Bewegung zwischen den Schaltpositionen aus. Die Kulisse weist Markierungspositionen entsprechend der Anzahl möglicher (bzw. sinnvoll einzunehmender) Schaltpositionen auf. Die Kulisse besteht mindestens zum Teil aus magnetisierbarem Material, wobei dieses an den Markierungspositionen unterschiedlich geformt ist. Bevorzugt besteht die Kulisse durchgängig aus einem ferromagnetischen Material, beispielsweise Eisen, das an den Markierungspositionen bearbeitet ist, beispielsweise durch Bohren, Fräsen, Stanzen etc.

Eine Sensoreinheit ist so angeordnet, dass sie in den verschiedenen Schaltpositionen jeweils eine Position vor den Markierungspositionen einnimmt. Bevorzugt ist die Sensoreinheit innerhalb eines umgebenden Gehäuses feststehend angeordnet, während sich die Schaltwelle gegenüber dem Gehäuse bewegen kann. Dabei weist die Sensorvorrichtung nur eine einzige solche Sensoreinheit auf.

Durch ein Magnetelement wird ein Magnetfeld erzeugt. Das Magnetelement kann auf dem beweglichen Teil, das heißt auf der Welle beziehungsweise der Kulisse angeordnet sein. Bevorzugt ist es jedoch an der Sensoreinheit angeordnet.

Das vom Magnetelement erzeugte Magnetfeld verläuft durch die Luft als Streumagnetfeld, wird aber mindestens im Bereich der Markierungspositionen von dem magnetisierbaren Material der Kulisse geleitet und durch dessen hohe Permeabilität konzentriert. Diese Beeinflussung des Magnetfeldes im Bereich der Schaltpositionen ist aufgrund der unterschiedlichen Formen des magnetisierbaren Materials an diesen Positionen unterschiedlich. Das so beeinflusste Magnetfeld wird von einem Magnetfeldsensorelement der Sensoreinheit erfasst und in ein Ausgangssignal umgewandelt. Das Ausgangssignal kann beispielsweise einem skalaren Wert für die Feldstärke entsprechen, ebenso ist aber auch die Erfassung einer oder mehrerer Feldrichtungen möglich.

Aufgrund der unterschiedlichen Beeinflussung des Magnetfeldes liefert das Magnetfeldsensorelement ein unterschiedliches Ausgangssignal, je nachdem welche der Markierungspositionen der Kulisse der Sensoreinheit gegenüber liegt. Auf diese Weise ermöglicht die Auswertung des Ausgangssignals die Unterscheidung von Schaltpositionen der Schaltwelle.

Eine erfindungsgemäße Sensorvorrichtung hat gegenüber herkömmlichen Vorrichtungen dieser Art erhebliche Vorteile. Es ist nur ein einziger Sensor erforderlich, so dass Aufwand und Kosten für die Gesamtvorrichtung erheblich geringer sind als bei herkömmlichen Anordnungen. Auch die Signalauswertung ist entsprechend einfacher, da nur das Ausgangssignal eines einzigen Magnetfeldsensorelements verarbeitet werden muss.

In mechanischer Hinsicht hat sich herausgestellt, dass die erfindungsgemäße Anordnung gegenüber mechanischen Toleranzen - beispielsweise des Abstandes zwischen Magnetfeldsensorelement und Kulisse - relativ unempfindlich ist.

Das Magnetelement kann beispielsweise ein Permanentmagnetelement sein. Es ist bevorzugt an der Sensoreinheit angeordnet, so dass sein Magnetfeld nicht zu einer Ansammlung von möglicherweise anfallenden magnetisierbaren Spänen im Bereich der Schaltwelle führen kann, was insbesondere bei einer Anordnung innerhalb eines Kfz-Getriebes vorteilhaft ist. Besonders bevorzugt ist das Magnetelement aus Richtung der Schaltwelle gesehen hinter dem Magnetfeldsensorelement angeordnet.

Die Kulisse weist bevorzugt eine gewölbte Oberfläche auf, die im Abstand von der Schaltwelle angeordnet ist. Die Oberfläche kann einem Teil einer Kreiszylindermantelfläche entsprechen, so dass eine gegenüber der beweglichen Welle feststehend angeordnete Sensoreinheit stets etwa den gleichen Abstand von der Oberfläche aufweist. Durch die Anordnung der Oberfläche im Abstand von der Schaltwelle vergrößert sich die für die Ausbildung von Markierungspositionen zur Verfügung stehende Fläche, so dass eine für die Unterscheidung der Positionen geeignete Formung vereinfacht ist.

Gemäß einer Weiterbildung der Erfindung sind an den Markierungspositionen Vertiefungen in der Oberfläche der Kulisse ausgebildet, insbesondere können in einer flächig gestalteten Kulisse Vertiefungen bzw. Löcher im Bereich der Markierungspositionen gebildet sein. Diese sind bezüglich ihrer Größe, Form und/oder Anordnung relativ zum Mittelpunkt der Markierungspositionen unterschiedlich ausgebildet, so dass sie zu einer voneinander abweichenden Beeinflussung des Magnetfeldes führen.

Die Unterscheidung der jeweils unterschiedlich gestalteten, vor der Sensoreinheit in den Schaltpositionen angeordneten Markierungspositionen der Kulisse erfolgt durch Auswertung des Ausgangssignals des Magnetfeldsensorelements. Einerseits ist eine Unterscheidung anhand einer reinen Erfassung der Feldstärke möglich, wenn sich beispielsweise die Kulisse an den Markierungspositionen durch die dort vorhandene Menge an magnetisierbarem Material (oder bei Vertiefungen: die jeweils entfernte Menge an magnetisierbarem Material) unterscheidet.

Alternativ oder zusätzlich hierzu kann auch die Richtung des beeinflussten Magnetfeldes erfasst und anhand dieser Informationen eine Unterscheidung der Schaltpositionen erreicht werden. Dies erhöht die Unempfindlichkeit gegenüber mechanischen Toleranzen. Die Erfassung der Richtung des Magnetfeldes erfolgt bevorzugt durch eine Sensorvorrichtung mit einer integrierten Schaltung, die mindestens zwei Feldstärkekomponenten in verschiedenen (bevorzugt orthogonalen) Richtungen erfasst. Durch Vergleich der Messwerte für die Feldstärkekomponenten, bevorzugt durch Auswertung des Verhältnisses der beiden Werte, kann eine Richtung des Magnetfeldes ermittelt werden.

Für die letztliche Signalauswertung, d.h. die Zuordnung der Sensor-Messwerte zu Gangpositionen der Schaltwelle sind verschiedene Arbeitsweisen möglich. Um eine sichere Erkennung der verschiedenen Gangpositionen und eine Unterscheidung von bspw. einer Neutralposition oder undefinierten Zwischenpositionen zu erlauben, können verschiedene Vergleiche nacheinander ausgeführt werden, bei denen geeignete Bedingungen logisch, d. h. entweder mit UND oder mit ODER miteinander verknüpft werden. Geeignete Bedingungen können die Einhaltung von unteren oder oberen Schwellenwerten sowie von Toleranzfenstern für verschiedene Werte sein, bspw. Komponenten der Feldstärke oder Winkelwerte. Besonders bevorzugt erfolgt eine Verknüpfung der Überprüfung eines Toleranzfensters von Winkelwerten mit der Überprüfung einer weiteren Bedingung auf Einhaltung eines Schwellenwertes für mindestens eine Komponente der gemessenen magnetischen Feldstärke.

Es ist gemäß einer Weiterbildung bevorzugt, dass die Form des magnetisierbaren Materials an den Markierungspositionen nicht rotationssymmetrisch ist. Dies führt dazu, dass jede Markierungsposition eine Richtung aufweist, in der das Magnetfeld am stärksten konzentriert wird. Die Markierungspositionen unterscheiden sich hinsichtlich ihrer Ausrichtung. Beispielsweise kann an jeder Markierungsposition eine Aussparung vorgesehen sein, wobei an jeder der Aussparungen eine Materialanhäufung zu einer von den anderen Aussparungen verschiedenen Richtung ausgerichtet ist. Durch Erfassung der Richtung des hierdurch beeinflussten Magnetfeldes sind die verschiedenen Markierungspositionen dann anhand des Ausgangssignals des Sensors unterscheidbar.

Die Sensoreinheit weist bevorzugt ein Sensorgehäuse auf. In dem Sensorgehäuse kann außer dem Magnetfeldsensorelement und einem Permanentmagnetelement auch eine Ansteuerungs- und/oder Auswerteelektronik vorgesehen sein. Die Elektronik verfügt über einen externen elektrischen Anschluss, der beispielsweise als Stecker oder Anschluss für ein festes Kabel ausgeführt sein kann. Über den Anschluss wird die Einheit einerseits mit elektrischer Energie versorgt, andererseits wird ein Sensorausgangssignal über den Anschluss abgegeben. Das Sensorausgangssignal kann auf verschiedene Weise, beispielsweise als Strom- oder Spannungssignal, entweder analog oder digital, insbesondere auch als PWM-Signal ausgegeben werden. Die Elektronik steuert das Magnetfeldsensorelement an und wertet dessen Signal aus. Insbesondere ist es möglich, die Unterscheidung der verschiedenen Positionen anhand des Ausgangssignals des Magnetfeldsensorelements bereits in einer elektronischen Schaltung innerhalb des Sensorgehäuses durchzuführen, so dass das Sensorausgangssignal am externen Anschluss nur noch die gewonnene Information über die aktuelle Schaltstellung und nicht mehr Details zu gemessenen Magnetfeldstärken bzw. -richtungen enthält. Die Sensoreinheit ist bevorzugt radial zur Längsachse der Schaltwelle ausgerichtet, wobei sich das Magnetfeldsensorelement - bevorzugt abgedeckt durch eine Kappe bzw. eine vordere Gehäusewand - im vorderen, der Schaltwelle zugewandten Bereich befindet.

Das Sensorgehäuse ist bevorzugt aus Kunststoff. Zweckmäßigerweise weist es einen Montagebereich, beispielsweise eine Öse zum Befestigen der Einheit auf. Ist eine Verfälschung der Erkennung durch externe Magnetfelder zu befürchten, kann am Sensorgehäuse eine magnetische Abschirmung, bspw. in Form einer Hülse bzw. eines Rings aus magnetisierbarem Material vorgesehen sein.

Bevorzugt findet die beschriebene Sensorvorrichtung Verwendung an einem Schaltgetriebe mit mehreren Gängen, beispielsweise einem Kfz-Getriebe. Hier wird die Schaltposition der für das Einlegen verschiedener Gänge verwendeten Schaltwelle ermittelt. Der Sensor kann hierbei bevorzugt innerhalb des Getriebegehäuses angeordnet sein.

Nachfolgend werden Ausführungsformen der Erfindung anhand von Zeichnungen näher beschrieben. In den Zeichnungen zeigen:

Fig. 1       eine perspektivische Ansicht eines Teils einer Getriebeschaltvorrichtung mit Gangwahlhebel, Schaltwelle und Sensoreinheit;

Fig. 2       eine vergrößerte Darstellung eins Teils einer Sensorvorrichtung aus Fig. 1;

Fig. 3       ein Längsschnitt durch die Sensoreinheit aus Fig. 1;

Fig. 4       eine vergrößerte perspektivische Schnittansicht eines Teils der Sensoreinheit aus Fig. 1 vor einer Markierungsposition der Kulisse;

Fig. 5a     in perspektivischer, vergrößerter Darstellung ein Teil einer Sensoreinheit mit einer ersten Ausführungsform einer Kulisse;

Fig. 5b     die Form der Kulisse aus Fig. 5a in einer Abwicklung;

Fig. 6a     in perspektivischer, vergrößerter Darstellung ein Teil einer Sensoreinheit mit einer zweiten Ausführungsform einer Kulisse;

Fig. 6b     die Form der Kulisse aus Fig. 6a in einer Abwicklung;

Fig. 7a     in perspektivischer, vergrößerter Darstellung ein Teil einer Sensoreinheit mit einer dritten Ausführungsform einer Kulisse;

Fig. 7b     die Form der Kulisse aus Fig. 7a in einer Abwicklung;

Fig. 7c     in vergrößerter, schematischer Schnittdarstellung ein Teil der Sensoreinheit aus Fig. 1 vor einer der Markierungspositionen der Kulisse;

Fig. 8a, 8b   in vergrößerter, schematischer Schnittdarstellung ein Teil der Sensoreinheit aus Fig. 1 vor verschiedenen Markierungspositionen der Kulisse;

Fig. 9       in schematischer Draufsicht das Magnetfeldsensorelement der Sensoreinheit aus Fig. 8a, 8b in der durch die Kulisse hervorgerufenen Feldverteilung.

Fig. 10 ein Ablaufdiagramm einer Signalauswertung zur Gangerkennung.

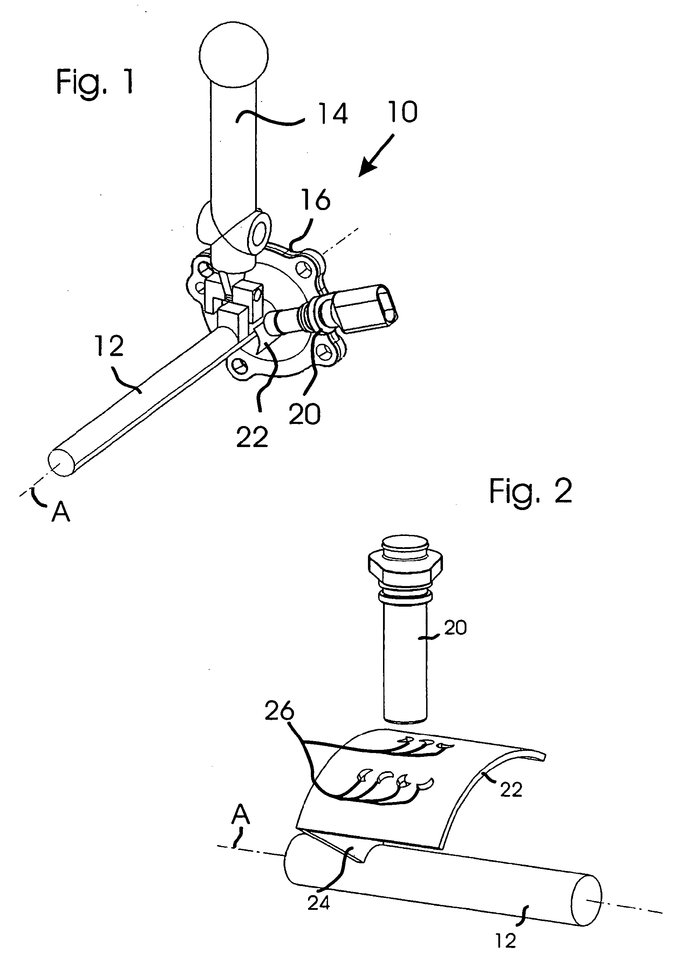

Fig. 1 zeigt in perspektivischer Ansicht einen Teil einer Getriebeschaltvorrichtung 10. Der dargestellte Teil der Getriebeschaltvorrichtung 10 umfasst eine Schaltwelle 12, einen Gangwahlhebel 14 und eine Montageplatte 16. Die hieraus gebildete Einheit ist als Teil eines Kfz-Getriebes an der Montageplatte 16 so montiert, dass sich die Schaltwelle 12 entsprechend der Stellung des Gangwahlhebels 14 entlang ihrer Längsachse A verschieben und um diese Achse A herum drehen kann. Die Schaltwelle 12 ist Teil eines Getriebes (nicht dargestellt) mit mehreren Gängen, zwischen denen durch Bewegung der Schaltwelle geschaltet wird. Hierbei legen im gezeigten Beispiel acht verschiedene Schaltpositionen der Schaltwelle 12 den Schaltzustand des Getriebes fest. Die Lagerung der Schaltwelle 12 ist üblicherweise so vorgesehen, dass sie in den verschiedenen Schaltpositionen einrastet.

Im Folgenden soll auf die konkrete Ausgestaltung der Schaltwelle 12 bzw. deren Anbringung innerhalb der Getriebeschaltvorrichtung 10 nicht näher eingegangen werden. Die entsprechenden Vorrichtungen sind dem Fachmann bekannt. Die in Fig. 1 dargestellte Konstruktion stellt insofern lediglich ein vereinfachtes Beispiel dar.

An der Getriebeschaltvorrichtung 10 ist eine Sensoreinheit 20 vorgesehen, die mit einer an der Schaltwelle 12 angebrachten Kulisse 22 zusammenwirkt, um die aktuelle Schaltstellung der Schaltwelle 12 zu ermitteln und als Sensorwert elektrisch auszugeben. Die Sensoreinheit 20 steht hierbei fest und ist beispielsweise mit der Montageplatte 16 bzw. anderen Teilen des Getriebegehäuses (nicht dargestellt) verbunden.

Die Kulisse 22 ist wie in Fig. 2 vergrößert dargestellt an der Schaltwelle 12 angebracht, im gezeigten Beispiel über ein radiales Verbindungselement 24. Durch das Verbindungselement 24 ist die Kulisse 22 so gehalten, dass ihre äußere Oberfläche einen Abstand zur Schaltwelle 12 aufweist. Sie ist als gekrümmtes, flächiges Element ausgebildet, dessen äußere Fläche einen Teil einer Kreiszylindermantelfläche bildet. Die Kulisse 22 besteht aus einem magnetisierbaren Werkstoff, im gezeigten Beispiel Eisen.

Der Kulisse 22 gegenüber ist die Sensoreinheit 20 in radialer Richtung auf die Längsachse A der Schaltwelle 12 hin angeordnet. Bei der beschriebenen Bewegung der Schaltwelle, die diese beim Schalten zwischen den Schaltstellungen des Getriebes ausführt, liegt das vordere Ende der Sensoreinheit 20 jeweils verschiedenen Positionen 26 der Kulisse 22 gegenüber. Diese Positionen 26 werden im Folgenden als "Markierungspositionen" bezeichnet.

Durch die Bewegung der Welle 12 werden je nach deren Stellung die Markierungspositionen jeweils vor die Sensoreinheit 20 geführt und dort abgefragt. So können mit der gezeigten einzigen Sensoreinheit 20 alle Markierungspositionen und damit alle Schaltstellungen abgefragt werden.

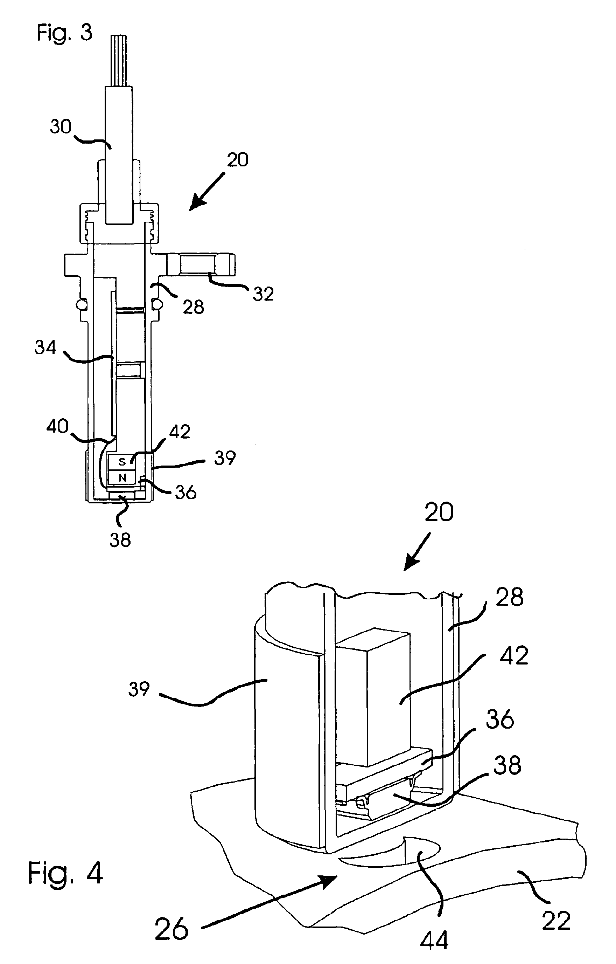

Fig. 3 zeigt den inneren Aufbau der Sensoreinheit 20. Diese umfasst ein im Wesentlichen zylindrisch ausgebildetes Sensorgehäuse 28 aus Kunststoff, das im hinteren Bereich einen Kabelanschluss 30 aufweist. Alternativ kann ein solcher Kabelanschluss auch als Stecker vorgesehen sein. Das Gehäuse 28 umfasst eine Anschraubböse 32 zur Befestigung der Sensoreinheit 20.

Im Inneren des Sensorgehäuses 28 ist eine Leiterplatte 34 mit einer elektronischen Schaltung (nicht dargestellt) angebracht, die so mit den Kontakten des Steckeranschlusses 30 verbunden ist, dass ihr über die Kabelverbindung elektrische Energie zugeführt wird. An die Schaltung auf der Leiterplatte 34 ist ein auf einer separaten Leiterplatte 36 integrierter Magnetfeldsensor 38 über eine flexible Verbindung 40 angeschlossen. Die Schaltung versorgt den Magnetfeldsensor 38 mit elektrischer Spannung und liest dessen Ausgangssignale aus.

Der Magnetfeldsensor 38 ist an der vorderen Spitze des länglichen, zylindrisch ausgebildeten Gehäuses 28 angeordnet. Hinter dem Magnetfeldsensor 38 ist ein Permanentmagnetelement 42 angeordnet, das in Längsrichtung der Sensoreinheit 20 magnetisiert ist.

Das vom Magnetelement 42 ausgehende Feld tritt durch den Magnetfeldsensor 38 an der Spitze der Sensoreinheit 20 aus. Hierbei wird die Feldverteilung durch ferromagnetisches Material beeinflusst, das sich vor der Sensoreinheit 20 befindet. Wie in Fig. 4 dargestellt ist in jeder Position der Schaltwelle 12 ein Teil der Kulisse 22, die aus magnetisierbarem Material besteht, vor dem vorderen Ende der Sensoreinheit 20 angeordnet.

Die Kulisse 22 ist nun an den Markierungspositionen 26, die in den jeweiligen Schaltpositionen unmittelbar vor dem vorderen Ende der Sensoreinheit 20 positioniert werden, unterschiedlich geformt. So ist in einigen Ausführungen wie beispielsweise in Fig. 4 gezeigt an den Markierungspositionen jeweils ein Ausschnitt 44 gebildet. Durch die unterschiedliche Formung des magnetisierbaren Materials, das sich in den verschiedenen Positionen vor der Sensoreinheit 20 befindet, bilden sich jeweils unterschiedliche Feldverläufe des durch den Permanentmagneten 42 erzeugten Magnetfeldes aus.

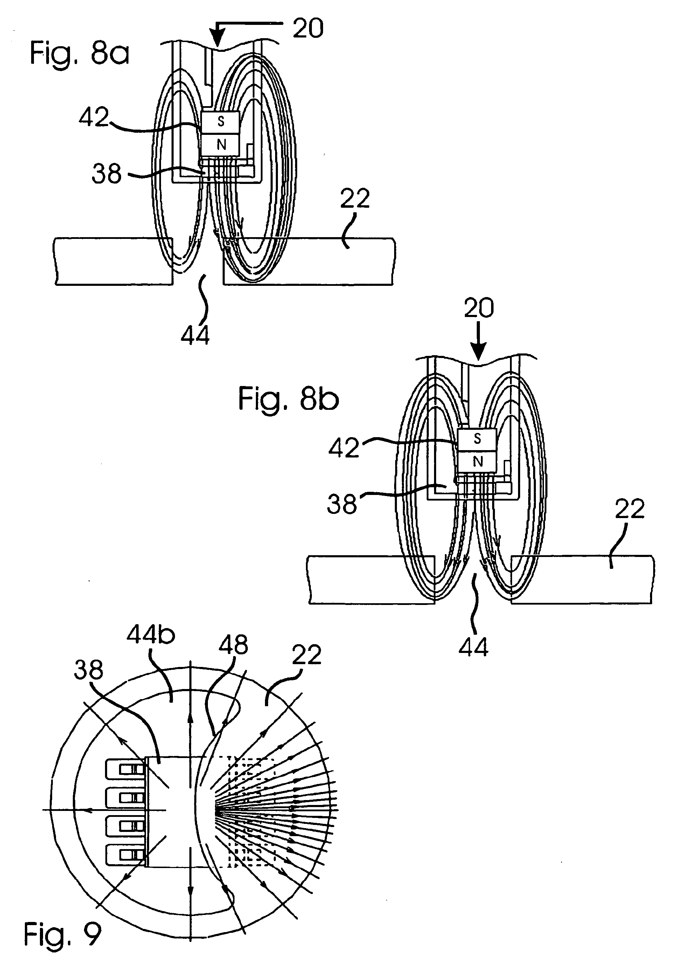

Beispielhafte Feldverläufe sind in Fig. 8a, 8b gezeigt. In den dort gezeigten Beispielen befindet sich im vorderen Bereich der Sensoreinheit 20 kein magnetisch leitfähiges Material, so dass das Magnetfeld dort als Streufeld in Luft bzw. durch das umgebende Kunststoffmaterial verläuft. Durch das vor der Sensoreinheit 20 angeordnete magnetisierbare Material der Kulisse 22, das eine relativ hohe Permeabilität aufweist, wird die Feldverteilung erheblich beeinflusst. Das Magnetfeld wird in Bereichen, in denen magnetisierbares Material am Permanentmagneten 42 angeordnet wird, konzentriert. So kommt es in der in Fig. 8a gezeigten Anordnung, bei der ein in der Schnittebene asymmetrisch vor dem Magneten 42 angeordneter Ausschnitt den Feldverlauf beeinflusst, zu einer entsprechenden asymmetrischen Feldverteilung. Hingegen führt die in Fig. 8b gezeigte symmetrische Anordnung eines Ausschnitts 44 im Material der Kulisse 22 zu einer im Wesentlichen symmetrischen Feldverteilung.

Das durch den Magneten 42 hervorgerufene und in seinem Verlauf durch die Kulisse 22 beeinflusste Magnetfeld wird mit dem Magnetfeldsensor 38 gemessen. Aus der Messung, das heißt aus einem Ausgangssignal des Magnetfeldsensors 38 soll nun eine Erkennung der jeweiligen Markierungspositionen 26 erfolgen, mit der die Kulisse 22 aktuell der Sensoreinheit 20 gegenüberliegt. Um eine solche Unterscheidbarkeit der Markierungspositionen 26 zu erreichen, ist die Kulisse 22 an den Markierungspositionen 26 unterschiedlich geformt.

Die Sensoreinheit 20 verfügt über eine Abschirmung 39 die verhindern soll, dass äußere Magnetfelder zu einer fehlerhaften Erfassung führen. Hierfür ist, wie in Figur 3 und 4 dargestellt, eine ringförmige Hülse 39 aus magnetisierbarem Material um den Magneten 42 und den Magnetfeldsensor 38 herum angeordnet. Von außen einwirkende seitlich gerichtete Magnetfelder werden auf diese Weise abgeschirmt.

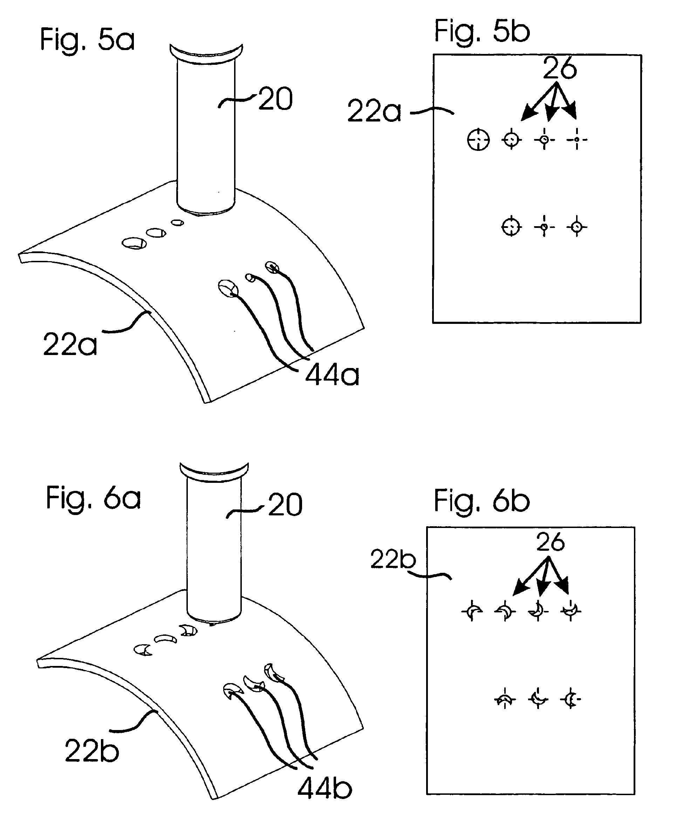

Fig. 5a zeigt eine erste Ausführungsform einer Kulisse 22a, die, wie in der Abwicklung in Fig. 5b gezeigt, jeweils zentral an den Markierungspositionen 26 runde Bohrungen 44a aufweist. Die Bohrungen unterscheiden sich hierbei im Durchmesser. Wird die Sensoreinheit 20 mit ihrem Magneten 42 an den jeweiligen Markierungspositionen positioniert, ergeben sich hierbei jeweils symmetrische Feldverteilungen, die allerdings je nach Durchmesser der Bohrung zu einem am Ort des Magnetfeldsensors 38 stärker oder weniger stark konzentrierten Magnetfeld führen.

Bei dieser Ausführung ist der integrierte Magnetfeldsensor 38 so ausgebildet, dass er die Feldstärke des durch ihn in Längsrichtung der Sensoreinheit 20 hindurchtretenden Magnetfeldes misst und als Ausgangssignal ausgibt. Entsprechende Sensoren sind dem Fachmann bekannt und handelsüblich erhältlich, insbesondere als Hall-Sensoren. Beispielsweise kann ein integrierter Sensor vom Typ TLE 4990 von Infineon oder MLX 90251 von Melexis verwendet werden.

Das Ausgangssignal wird von der elektrischen Schaltung auf der Leiterplatte 34 ausgewertet, indem der gemessene Wert der Feldstärke mit vorgegebenen Werteintervallen verglichen wird, von denen jedes einer Schaltposition zugeordnet ist. Auf diese Weise erfolgt auch bei leichten Messfehlern, wie sie durch schwankenden Abstand der Sensoreinheit 20 von der Kulisse 22 entstehen können, eine sichere Erkennung der aktuellen Schaltstellung. Die ermittelte Schaltstellung wird dann beispielsweise als digitales Ausgangssignal durch die Kontakte des Steckeranschlusses 30 ausgegeben.

In einer zweiten Ausführungsform sind an den Markierungspositionen 26 ebenfalls Ausschnitte gebildet. Diese sind jedoch im Gegensatz zur ersten Ausführungsform nicht um die Längsachse der Sensoreinheit 20 rotationssymmetrisch, sondern weisen jeweils eine Vorzugsrichtung auf, in der das hierdurch beeinflusste Magnetfeld besonders konzentriert wird.

Fig. 6a zeigt eine Kulisse 22b gemäß der zweiten Ausführung, bei der an den Markierungspositionen halbmondförmige Ausschnitte 44b gebildet sind. Die Ausschnitte 44b entsprechen in ihrer Form einem kreisrunden Ausschnitt, in den zu einer Richtung eine Materialansammlung gebildet ist. Die entsprechende Form ist in Fig. 9 vergrößert dargestellt. Wie dort symbolisch gezeigt wird das Magnetfeld durch eine solche Form so beeinflusst, dass es in Richtung der Materialansammlung 48 (Vorzugsrichtung) konzentriert wird.

In diesem Fall ist der Magnetfeldsensor 38 als integrierter Magnetfeldsensor ausgebildet, der die Richtung des magnetischen Feldes an seinem Ort misst und ein entsprechendes, ggfs. mehrkanaliges Signal ausgibt. Bei Sensoren dieser Art erfolgt eine Messung von Magnetfeldkomponenten jeweils in der Richtung von zwei oder drei orthogonalen Achsen. Aus den Messwerten von Feldstärkekomponenten in zwei orthogonalen Richtungen kann ein resultierender Winkel des Gesamtfeldes in der dadurch aufgespannten Ebene errechnet werden durch Bildung des Verhältnisses der beiden Werte und Berechnung der Arkustangens-Funktion hiervon. Entsprechende Magnetfeldsensoren sind dem Fachmann bekannt und kommerziell erhältlich. Beispielsweise kann hier ein Sensor vom Typ MLX 90333 von Melexis verwendet werden. Die Arkustangens-Funktion wird dabei bevorzugt mittels des CORDIC-Algorithmus oder über eine Wertetabelle (Look up-Table) berechnet.

Zur Erkennung der Markierungspositionen jeweils anhand der individuellen Feldverläufe werden die vom Magnetfeldsensor 38 aufgenommenen Rohdaten, die das Magnetfeld in drei Achsen (x-, y- und z-Richtung) darstellen, verarbeitet. Aus diesen Rohdaten wird (entweder im integrierten Magnetfeldsensor 38 oder in einer nachgeschalteten Verarbeitungseinheit) mindestens ein Winkel des Magnetfeldes und eine Gesamtstärke berechnet.

Um eine Zuordnung der so errechneten Werte zu den jeweiligen Markierungspositionen zu ermöglichen erfolgt ein Vergleich der Werte mit entsprechenden Schwellenwerten. Im Beispiel gemäß Fig. 6a, 6b beispielsweise unterscheiden sich verschiedene Markierungspositionen jeweils um mindestens 45°. Durch geeignete Schwellenwerte wird für jede Markierungsposition ein Intervall festgelegt, so dass bei einem Winkelwert innerhalb des festgelegten Intervalls die zugehörige Markierungsposition erkannt wird.

Um eine verlässliche Erkennung der einzelnen Positionen und auch eine zusätzliche Erkennung der neutralen Position (zwischen den Markierungspositionen) zu ermöglichen, wird zusätzlich die Gesamtfeldstärke mit Schwellenwerten verglichen um sicherzustellen, ob überhaupt eine der Aussparungen 44b der Markierungspositionen im Erfassungsbereich der Sensoreinheit 20 angeordnet ist. Das Ergebnis dieser Überprüfung wird mit dem Ergebnis des obigen Vergleichs der Winkelwerte logisch verknüpft.

Die logische Verknüpfung verschiedener Messergebnisse erlaubt somit, trotz Schwankungen, die beispielsweise aus Temperaturabhängigkeiten oder schwankendem Abstand der Sensoreinheit 20 von der Kulisse 22b resultieren, stets eine verlässliche Erkennung der einzelnen Markierungspositionen sowie der neutralen Position.

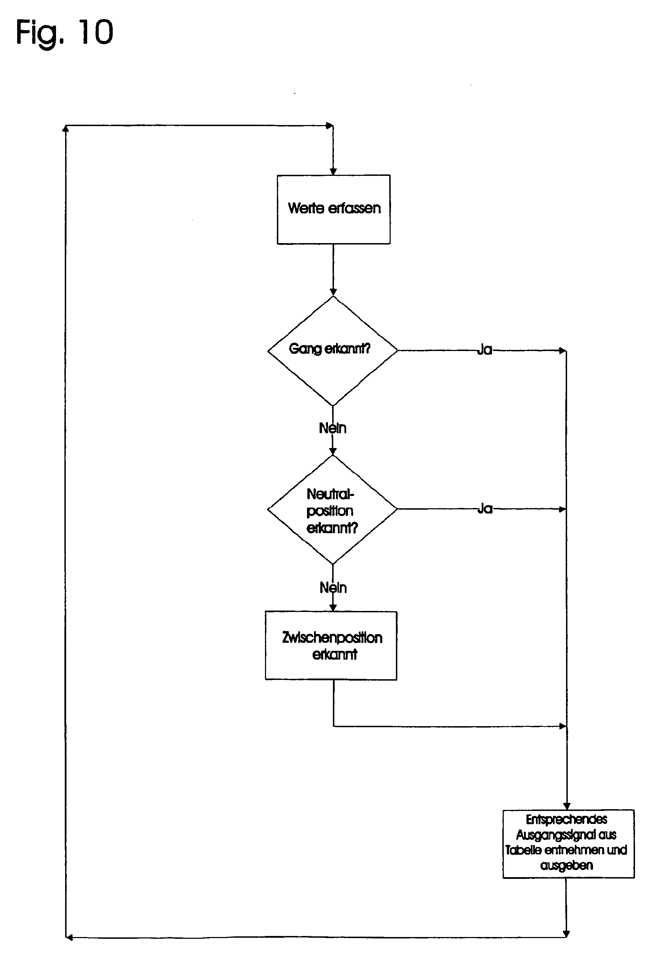

Ein bevorzugtes Beispiel einer entsprechenden Signalauswertung wird nachfolgend anhand von Fig. 10 beschrieben.

Definiert sind Schwellenwerte für die Stärke des Magnetfeldes in Z-Richtung (d.h. in radialer Richtung, nämlich senkrecht zur Kulissenfläche) einerseits für die Erkennung eines Ganges (Schwellenwert $S_{G,z}$ sowie für die Erkennung der Neutralposition $S_{N,z}$ sowie in hierzu orthogonaler x-Richtung für die Neu-tralposition $S_{N,x}$. Zudem sind für jeden der Gänge Toleranzfenster von Winkelwerten in der x-y-Ebene definiert, beispielsweise

| | |
|---|---|
| 0° - < 45° | 1. Gang |
| 45° - < 90° | 2. Gang |
| 90° - < 135° | 3. Gang |
| 135° - < 180° | 4. Gang |
| 180° - < 225° | 5. Gang |
| 225° - < 270° | 6. Gang |
| 270° - < 315° | Rückwärtsgang |

Wie in Fig. 10 gezeigt, werden zunächst hier Rohdaten, d.h. die Stärke des Magnetfelds in den drei Achsen $B_x$, $B_y$, $B_z$ ermittelt.

Anhand der Werte wird zunächst überprüft, ob eine der vordefinierten Gangpositionen erkannt wird. Hierfür sind die beiden folgenden Bedingungen logischen mit UND verknüpft:

$$B_z > S_{G,z}$$

Winkel, d. h. Arctan ($B_y/B_x$) im Toleranzfenster eines Ganges.

Wenn beide Bedingungen erfüllt sind, also der aktuelle Messwert für die Magnetfeldstärke in Z-Richtung größer ist als ein vordefinierter Schwellwert und der Winkel gleichzeitig dem Toleranz-Fenster eines Ganges entspricht, so gibt der Sensor ein entsprechendes, in einer Tabelle vordefiniertes Ausgangssignal für den entsprechenden Gang (bspw. "1. Gang") aus.

Wurde kein Gang erkannt, so wird geprüft, ob sich die Welle in einer Neutralposition befindet. Hierfür werden die beiden folgenden Bedingungen überprüft und mit UND verknüpft:

$$B_z > S_{N,z}$$

$$B_x < S_{N,x}$$

Wenn beide Bedingungen kumulativ erfüllt sind, also der aktuelle Messwert in Z-Richtung größer ist als ein vordefinierter Schwellwert für die Neutralposition und gleichzeitig der aktuelle Messwert in X-Richtung kleiner ist als ein vordefinierter Schwellwert für die Neutralposition, wird die Neutralposition erkannt und ein entsprechendes Ausgangssignal abgegeben.

Ist keine der beiden Erkennungen erfolgreich, so wird eine Zwischenposition erkannt und ggf. signalisiert.

Wie aus der Abwicklung in Fig. 6b ersichtlich sind die in der Oberfläche der Kulisse 22b gebildeten Ausnehmungen 44b an den verschiedenen Markierungspositionen 26 in verschiedene Richtungen angeordnet. Je nach der benötigten Anzahl an zu unterscheidenden Schaltpositionen kann hier beispielsweise vorgesehen sein, dass zwischen den jeweiligen Vorzugsrichtungen Unterschiede von mindestens 30° vorzusehen sind, dann wären 12 Positionen unterscheidbar. Für ein Kfz-Getriebe reicht die Unterscheidung von 8 Positionen (neutral, rückwärts, 6 Vorwärtsgänge) zurzeit aus, so dass die Differenz zwischen zwei Schaltpositionen 45° betragen kann. Auf diese Weise ist eine sichere Erkennung der aktuellen Position möglich. Darüber hinaus erweist sich insbesondere die zweite Ausführung auch als relativ unempfindlich gegenüber mechanischen Toleranzen, da verschiedene Abstände zwischen der Sensoreinheit 20 und der Kulisse 22b zwar zu unterschiedlichen starken Feldstärken, aber nicht zu einer Änderung der festgestellten Vorzugsrichtung führt.

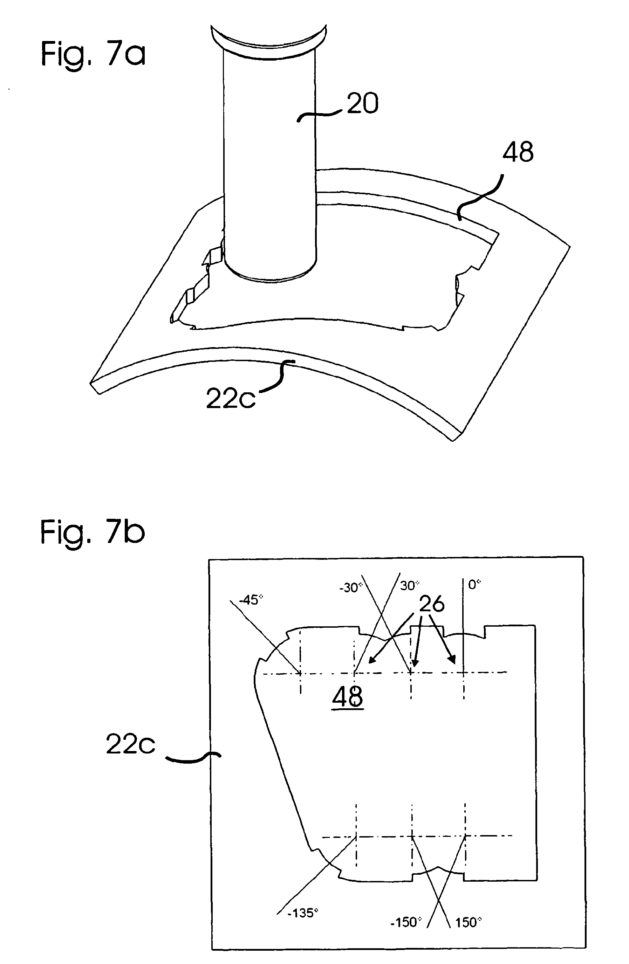

Bei der dritten Ausführungsform gemäß Fig. 7a entspricht die Kulisse 22c in der Grundform wie schon bei den beiden vorherigen Ausführungen einer gebogenen Platte. Hier allerdings sind nicht lediglich an den Markierungspositionen 26 Ausschnitte gebildet, sondern es ist ein zentraler, umfassender Ausschnitt 48 vorhanden. Dieser umfasst mit seiner Berandung sämtliche Markierungspositionen 26, so dass dies in diesem Fall zu einer unterschiedlichen Konzentrationswirkung auf das Magnetfeld an den verschiedenen Positionen führt.

Fig. 7b zeigt die Lage der Markierungspositionen 26 relativ zur Berandung des Ausschnittes 48. Wie dargestellt ist die relative Anordnung des magnetisierbaren Materials der Kulisse 22c zum Mittelpunkt der jeweiligen Markierungsposition unterschiedlich. Daher ergibt sich an jeder Markierungsposition eine durch den Magnetsensor 38 erfassbare individuell unterschiedliche Feldverteilung. Durch Auswertung von Richtung und Stärke des Magnetfeldes können so sämtliche der Positionen unterschieden werden.

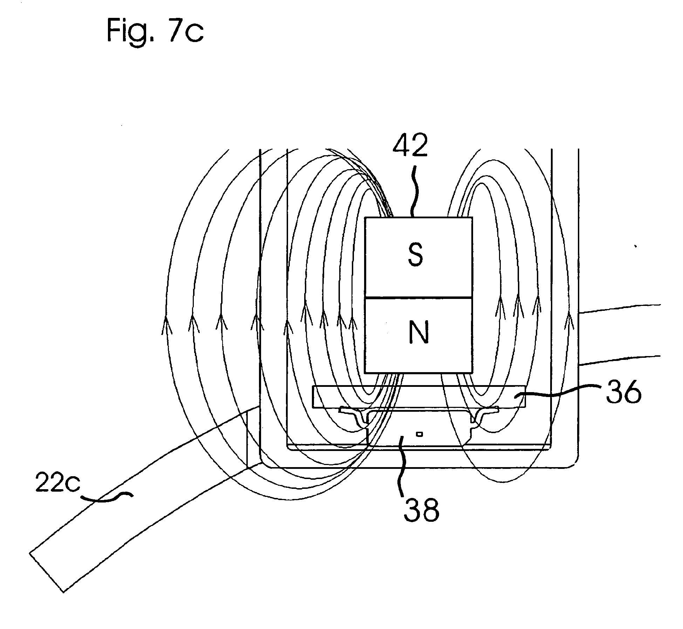

Im Gegensatz zu den zuvor gezeigten Ausführungsformen, bei denen die Stirnseite der Sensoreinheit 20 jeweils radial vor der Kulisse angeordnet ist, befindet sich der vordere Bereich der Sensoreinheit 20 bei der dritten Ausführung innerhalb des Ausschnittes 48. Hier wird das Magnetfeld durch die unter verschiedenen Winkeln neben den Markierungspositionen angeordneten Materialbereiche seitlich konzentriert bzw. abgelenkt. Die entsprechende Eingriffssituation ist beispielhaft in Figur 7c gezeigt. Durch die stärkere Konzentration des Feldes zur in der Figur linken Seite kann diese Position von anderen unterschieden werden.

Zu den gezeigten Ausführungsformen sind eine Anzahl von Abwandlungen denkbar. Während in den gezeigten Beispielen die Sensoreinheit 20 stets länglich und radial ausgerichtet dargestellt war, sind alternativ auch andere Formen und Ausrichtungen denkbar. Auch die Magnetisierungsrichtung des Magneten muss nicht zwangsweise rein radial erfolgen, sondern es kommt darauf an, ob die Ausrichtung des Magnetfeldes und des Sensors so ist, dass die Erkennung der resultierenden Feldverteilung an den Markierungspositionen zu einem unterscheidbaren Sensorsignal führt.

**Patentansprüche**

1. Sensorvorrichtung zur Ermittlung der Schaltstellung einer Schaltwelle (12), mi

   - einer auf der Schaltwelle (12) angebrachten Kulisse (22),
   - wobei die Kulisse (22) mindestens zum Teil aus magnetisierbarem Material besteht, das an Markierungspositionen (26) unterschiedlich geformt ist,
   - und einer Sensoreinheit (20), die ein Magnetfeldsensorelement (38) aufweist,
   - wobei ein Magnetelement (42) ein Magnetfeld erzeugt, das an den Markierungspositionen (26) von dem magnetisierbaren Material konzentriert wird,
   - wobei die unterschiedliche Form des magnetisierbaren Materials an den Markierungspositionen (26) zu einem am Ort des Magnetfeldsensorelements (38) unterschiedlichen Feld führt,

   **dadurch gekennzeichnet, dass**

   - die Schaltwelle beim Schalten zwischen verschiedenen Schaltpositionen eine translatorische Bewegung in Richtung ihrer Längsachse (A) und eine rotatorische Bewegung um die Längsachse ausführt, dass
   - jeder Schaltposition eine Markierungsposition zugeordnet ist, wobei an allen. Markierungspositionen (26) das magnetisierbare Material unterschiedlich geformt ist

- und dass in jeder Schaltposition die Sensoreinheit (20) vor der jeweils zugeordneten Markierungsposition (26) positioniert ist,
- wobei eine Ansteuerungs- und/oder Auswerteelektronik (34) vorgesehen ist zur Unterscheidung der Schaltpositionen anhand der Auswertung des Ausgangssignals nur des einen Magnetfeldsensorelements (38).

2. Vorrichtung nach Anspruch 1, bei der

     - die Sensoreinheit (20) das Magnetelement (42) umfasst.

3. Vorrichtung nach einem der vorangehenden Ansprüche, bei der

     - an den Markierungspositionen (26) Vertiefungen, Aussparungen oder Ausschnitte (44) in der Oberfläche der Kulisse (22) ausgebildet sind.

4. Vorrichtung nach einem der vorangehenden Ansprüche, bei der

     - das Magnetfeldsensorelement (38) so ausgebildet ist, dass das Ausgangssignal von der Feldstärke des Magnetfeldes abhängig ist.

5. Vorrichtung nach einem der vorangehenden Ansprüche, bei der

     - das Magnetfeldsensorelement (38) so ausgebildet ist, dass das Ausgangssignal von der Richtung des Magnetfeldes abhängig ist.

6. Vorrichtung nach Anspruch 5, bei der

     - das Magnetfeldsensorelement als integrierte Schaltung ausgebildet ist, mit der Feldstärkekomponenten eines magnetischen Feldes in mindestens zwei Richtungen erfassbar sind.

7. Vorrichtung nach Anspruch 5 oder 6, bei der

     - die Form des magnetisierbaren Materials an den Markierungspositionen (26) nicht rotationssymmetrisch ist, so dass jede Markierungsposition (26) eine Richtung hat, in der das Magnetfeld am stärksten konzentriert wird,
     - wobei sich die Markierungspositionen (26) hinsichtlich ihrer Ausrichtung unterscheiden.

8. Vorrichtung nach einem der vorangehenden Ansprüche, bei der

     - die Sensoreinheit (20) in ihrem vorderen, der Schaltwelle (12) zugewandten Bereich eine als Magnetfeldsensorelement ausgebildete integrierte Schaltung (38),
- und dahinter ein Permanentmagnetelement (42) aufweist.

9. Vorrichtung nach Anspruch 8, bei der

     - die Sensoreinheit (20) ein Sensorgehäuse (28) aufweist,
     - wobei in dem Sensorgehäuse (28) die Ansteuerungs- und/oder Auswerteelektronik für das Magnetfeldsensorelement (38) angeordnet ist,
     - und am Sensorgehäuse (28) ein externer elektrischer Anschluss (30) für die Ansteuerungs- und/oder Auswerteelektronik vorgesehen ist.

10. Vorrichtung nach einem der Ansprüche 8, 9 bei der

     - die Sensoreinheit (20) radial zur Längsachse (A) der Schaltwelle (12) angeordnet ist.

11. Vorrichtung nach einem der vorangehenden Ansprüche, bei der

     - die Kulisse (22) eine gewölbte Oberfläche aufweist, die im Abstand von der Schaltwelle (12) angeordnet ist.

12. Getriebeschaltvorrichtung mit

     - einem Getriebe mit mehreren Gängen,
     - einer Schaltwelle (12), die durch Bewegung zwischen verschiedenen Schaltpositionen zwischen verschiedenen Gängen des Getriebes schaltet und dabei eine translatorische Bewegung in Richtung ihrer Längsachse (A) und eine rotatorische Bewegung um ihre Längsachse ausführt,
     - und einer Sensorvorrichtung nach einem der vorangehenden Ansprüche zur Ermittlung der Schaltstellung des Getriebes.

13. Verfahren zur Ermittlung der Schaltstellung einer Schaltwelle (12), die beim Schalten zwischen verschiedenen Schaltpositionen eine translatorische Bewegung in Richtung ihrer Längsachse (A) und eine rotatorische Bewegung um ihre Längsachse ausführt, bei dem

     - eine Kulisse (22) auf der Schaltwelle (12) angebracht wird,
     - wobei die Kulisse (22) mindestens zum Teil aus magnetisierbarem Material besteht, das an Markierungspositionen (26) unterschiedlich geformt ist, wobei jeder Schaltposition eine Markierungsposition zugeordnet ist, wobei an allen Markierungspositionen (26) das magnetisierbare Material unterschiedlich geformt ist,

- und eine Sensoreinheit (20) mit einem Magnetfeldsensorelement (38) so angeordnet wird, dass in jeder Schaltposition die Sensoreinheit (20) vor der jeweils zugeordneten Markierungsposition (26) positioniert wird,
- wobei von einem Magnetelement (42) ein Magnetfeld hervorgerufen wird, das an den Markierungspositionen (26) von dem magnetisierbarem Material konzentriert wird, wobei die unterschiedliche Form des magnetisierbaren Materials an den Markierungspositionen (26) zu einem am Ort des Magnetfeldsensorelements (38) unterschiedlichen Feld führt,
- und bei dem anhand der Auswertung des Ausgangssignals nur des einen Magnetfeldsensorelements (38) die Schaltpositionen unterschieden werden.

**Claims**

1. A sensor apparatus for detecting the shift position of a shifter shaft (12) with

   - a connecting link member (22) attached to the shifter shaft (12),
   - wherein the connecting link member (22) is made at least partially of magnetizable material, which is shaped differently at marking positions (26),
   - and a sensor unit (20), which has a magnetic field sensor element (38),
   - wherein a magnetic element (42) creates a magnetic field, which is concentrated at the marking positions (26) by the magnetizable material,
   - wherein the different shape of the magnetizable material at the marking positions (26) leads to a different field at the location of the magnetic field sensor element (38),

   **characterized in that**

   - the shifter shaft executes a translatory movement in the direction of its longitudinal axis (A) and a rotatory movement around the longitudinal axis when shifting between different shift positions, **in that**
   - a marking position is assigned to each shift position wherein the magnetizable material is shaped differently at all marking positions (26)
   - and **in that** in each shift position the sensor unit (20) is positioned in front of the respectively assigned marking position (26),
   - wherein a control and/or evaluation electronics system (34) is provided for differentiating between the shift positions based on the evaluation of the output signal of just the one magnetic field sensor element (38).

2. The apparatus according to claim 1, in which

   - the sensor unit (20) comprises the magnetic element (42).

3. The apparatus according to one of the preceding claims, in which

   - at the marking positions (26), depressions, recesses or cut-outs (44) are designed in the surface of the connecting link member (22).

4. The apparatus according to one of the preceding claims, in which

   - the magnetic field sensor element (38) is designed such that the output signal is dependent on the field strength of the magnetic field.

5. The apparatus according to one of the preceding claims, in which

   - the magnetic field sensor element (38) is designed such that the output signal is dependent on the direction of the magnetic field.

6. The apparatus according to claim 5, in which

   - the magnetic field sensor element is designed as an integrated circuit, with which field strength components of a magnetic field are ascertainable in at least two directions.

7. The apparatus according to claim 5 or 6, in which

   - the shape of the magnetizable material at the marking positions (26) is not rotationally symmetrical so that each marking position (26) has a direction, in which the magnetic field is concentrated strongest,
   - wherein the marking positions (26) differ with respect to their alignment.

8. The apparatus according to one of the preceding claims, in which

   - the sensor unit (20) in its front area facing the shifter shaft (12) has an integrated circuit (38) designed as a magnetic field sensor element,
   - and behind this has a permanent magnetic element (42).

9. The apparatus according to claim 8, in which

   - the sensor unit (20) has a sensor housing (28),
   - wherein the control and/or evaluation electronics system for the magnetic field sensor element (38) is arranged in the sensor housing (28),

- and an external electrical connection (30) is provided on the sensor housing (28) for the control and/or evaluation electronics system.

10. The apparatus according to one of claims 8, 9 in which

- the sensor unit (20) is arranged radially to the longitudinal axis (A) of the shifter shaft (12).

11. The apparatus according to one of the preceding claims, in which

- the connecting link member (22) has a curved surface, which is arranged at a distance from the shifter shaft (12).

12. A gearbox switching device with

- a gearbox with several gears,
- a shifter shaft (12) which switches between different gears of the gearbox through movement between different shift positions and thereby executes a translatory movement in the direction of its longitudinal axis (A) and a rotatory movement around its longitudinal axis,
- and a sensor device according to one of the preceding claims for detecting the shift position of the gearbox.

13. A method for detecting the shift position of a shifter shaft (12) which executes a translatory movement in the direction of its longitudinal axis (A) and a rotatory movement around its longitudinal axis when shifting between different shift positions, in which

- a connecting link member (22) is attached to the shifter shaft (12),
- wherein the connecting link member (22) is made at least partially of magnetizable material, which is shaped differently at marking positions (26), wherein a marking position is assigned to each shift position, wherein at all marking positions (26) the magnetizable material is shaped differently,
- and a sensor unit (20) with a magnetic field sensor element (38) is arranged such that in each shift position the sensor unit (20) is positioned in front of the respectively assigned marking position (26),
- wherein a magnetic field is generated by a magnetic element (42), which is concentrated at the marking positions (26) by the magnetizable material, wherein the different shape of the magnetizable material at the marking positions (26) leads to a different field at the location of the magnetic field sensor element (38),

- and in which the shift positions are differentiated based on the evaluation of the output signal only of the one magnetic field sensor element (38).

**Revendications**

1. Dispositif de capteur pour la détermination de la position de commande d'un arbre de commande de vitesses (12) comprenant

- une coulisse (22) montée sur l'arbre de commande de vitesses (12),
- dans lequel la coulisse (22) se compose au moins en partie de matériau aimantable qui est formé de manière différente au niveau de positions de marquage (26),
- et un module de capteur (20) qui présente un élément de capteur de champ magnétique (38),
- dans lequel un élément magnétique (42) génère un champ magnétique qui est concentré au niveau des positions de marquage (26) du matériau aimantable,
- dans lequel la forme différente du matériau aimantable au niveau des positions de marquage (26) conduit à un champ différent à l'emplacement de l'élément de capteur de champ magnétique (38),

**caractérisé en ce que**

- l'arbre de commande de vitesses exécute un mouvement de translation en direction de son axe longitudinal (A) et un mouvement de rotation autour de l'axe longitudinal lors de la commutation entre différentes positions de commande, que
- une position de marquage est associée à chaque position de commande, dans lequel le matériau aimantable est formé de manière différente au niveau de toutes les positions de marquage (26)
- et que le module de capteur (20) est positionné avant la position de marquage respectivement associée (26) dans chaque position de commande,
- dans lequel un dispositif électronique d'amorçage et/ou d'évaluation (34) est prévu pour différencier les positions de commande à l'aide de l'évaluation du signal de sortie du seul élément de capteur de champ magnétique (38).

2. Dispositif selon la revendication 1, dans lequel

- le module de capteur (20) comprend l'élément magnétique (42).

**3.** Dispositif selon l'une quelconque des revendications précédentes, dans lequel

   - des renfoncements, des évidements ou des découpes (44) sont réalisés dans la surface de la coulisse (22) au niveau des positions de marquage (26).

**4.** Dispositif selon l'une quelconque des revendications précédentes, dans lequel

   - l'élément de capteur de champ magnétique (38) est réalisé de sorte que le signal de sortie dépend de l'intensité du champ magnétique.

**5.** Dispositif selon l'une quelconque des revendications précédentes, dans lequel

   - l'élément de capteur de champ magnétique (38) est réalisé de sorte que le signal de sortie dépend de la direction du champ magnétique.

**6.** Dispositif selon la revendication 5, dans lequel

   - l'élément de capteur de champ magnétique est réalisé en tant que circuit intégré avec lequel des composantes d'intensité d'un champ magnétique peuvent être détectées dans au moins deux directions.

**7.** Dispositif selon la revendication 5 ou 6, dans lequel

   - la forme du matériau aimantable au niveau des positions de marquage (26) n'est pas à symétrie de rotation de sorte que chaque position de marquage (26) a une direction dans laquelle le champ magnétique est concentré le plus fortement,
   - dans lequel les positions de marquage (26) se différencient en ce qui concerne leur orientation.

**8.** Dispositif selon l'une quelconque des revendications précédentes, dans lequel

   - le module de capteur (20) présente un circuit intégré (38) réalisé en tant qu'élément de capteur de champ magnétique dans sa région avant tournée vers l'arbre de commande de vitesses (12),
   - et derrière celui-ci un élément magnétique permanent (42).

**9.** Dispositif selon la revendication 8, dans lequel

   - le module de capteur (20) présente un logement de capteur (28),
   - dans lequel le dispositif électronique d'amorçage et/ou d'évaluation pour l'élément de capteur de champ magnétique (38) est disposé dans le logement de capteur (28),
   - et un raccord électrique externe (30) est prévu sur le logement de capteur (28) pour le dispositif électronique d'amorçage et/ou d'évaluation.

**10.** Dispositif selon l'une quelconque des revendications 8, 9, dans lequel

   - le module de capteur (20) est disposé radialement à l'axe longitudinal (A) de l'arbre de commande de vitesses (12).

**11.** Dispositif selon l'une quelconque des revendications précédentes, dans lequel

   - la coulisse (22) présente une surface bombée qui est disposée à distance de l'arbre de commande de vitesses (12).

**12.** Dispositif de changement de vitesses comprenant

   - une boîte de vitesses avec plusieurs vitesses,
   - un arbre de commande de vitesses (12) qui commute entre différentes vitesses de la boîte de vitesses par mouvement entre différentes positions de commande et exécute ce faisant un mouvement de translation en direction de son axe longitudinal (A) et un mouvement de rotation autour de son axe longitudinal,
   - et un dispositif de capteur selon l'une quelconque des revendications précédentes pour la détermination de la position de commande de la boîte de vitesses.

**13.** Procédé de détermination de la position de commande d'un arbre de commande de vitesses (12) qui exécute un mouvement de translation en direction de son axe longitudinal (A) et un mouvement de rotation autour de son axe longitudinal lors de la commutation entre différentes positions de commande, dans lequel

   - une coulisse (22) est montée sur l'arbre de commande de vitesses (12),
   - dans lequel la coulisse (22) se compose au moins en partie de matériau aimantable qui est formé de manière différente au niveau de positions de marquage (26), dans lequel une position de marquage est associée à chaque position de commande, dans lequel le matériau aimantable est formé de manière différente au niveau de toutes les positions de marquage (26),
   - et un module de capteur (20) avec un élément de capteur de champ magnétique (38) est disposé de sorte que dans chaque position de commande, le module de capteur (20) est positionné avant la position de marquage respectivement associée (26),

- dans lequel un champ magnétique qui est concentré au niveau des positions de marquage (26) du matériau aimantable est provoqué par un élément magnétique (42), dans lequel la forme différente du matériau aimantable au niveau des positions de marquage (26) conduit à un champ différent à l'emplacement de l'élément de capteur de champ magnétique (38),

- et dans lequel les positions de commande sont différenciées à l'aide de l'évaluation du signal de sortie du seul élément de capteur de champ magnétique (38).

Fig. 1

Fig. 2

Fig. 3

Fig. 4

Fig. 5a

20

22a

44a

Fig. 5b

26

22a

Fig. 6a

20

22b

44b

Fig. 6b

26

22b

Fig. 7a

Fig. 7b

## Fig. 7c

Fig. 8a

20

42

38

22

44

Fig. 8b

20

42

38

22

44

44b    48    22

38

Fig. 9

# Fig. 10

**IN DER BESCHREIBUNG AUFGEFÜHRTE DOKUMENTE**

**In der Beschreibung aufgeführte Patentdokumente**

- DE 9109855 U1
- DE 19748115 C2
- US 20040100253 A
- DE 19748115
- DE 19621404
- US 5867092 A
- US 5625289 A
- US 4853629 A